# EUROPÄISCHE PATENTSCHRIFT

(11) **EP 2 977 282 B1**
(45) Veröffentlichungstag und Bekanntmachung des Hinweises auf die Patenterteilung: **07.06.2017**
(21) Anmeldenummer: 15172401.0
(22) Anmeldetag: 16.06.2015
(51) Int. Cl.: B60T 8/32, B60T 13/58, B60T 13/74

(54) **BREMSSYSTEM FÜR EIN FAHRZEUG, INSBESONDERE EINEN KRAFTWAGEN, SOWIE VERFAHREN ZUM BETREIBEN EINES SOLCHEN BREMSSYSTEMS**
BRAKE SYSTEM FOR A VEHICLE, IN PARTICULAR A MOTOR VEHICLE, AND METHOD FOR OPERATING SUCH A BRAKE SYSTEM
SYSTÈME DE FREINAGE DE VÉHICULE, PLUS PARTICULIÈREMENT DE VÉHICULE AUTOMOBILE ET PROCÉDÉ DE FONCTIONNEMENT D'UN TEL SYSTÈME DE FREINAGE

(30) Priorität: 23.07.2014 DE 102014214375
(43) Veröffentlichungstag der Anmeldung: 27.01.2016
(73) Patentinhaber: Volkswagen Aktiengesellschaft, 38440 Wolfsburg (DE)
(72) Erfinder: Witte, Bastian, 38179 Groß Schwülper (DE)

(56) Entgegenhaltungen:
- EP-A1- 1 968 831
- EP-A1- 2 719 593
- WO-A1-00/68056
- WO-A1-2013/178323
- WO-A2-2010/146158
- DE-A1-102013 017 688
- GB-A- 2 225 397

## Beschreibung

Die Erfindung betrifft ein Bremssystem für ein Fahrzeug, insbesondere einen Kraftwagen, gemäß dem Oberbegriff von Patentanspruch 1, sowie ein Verfahren zum Betreiben eines solchen Bremssystems gemäß dem Oberbegriff von Patentanspruch 7.

Ein solches Bremssystem und ein solches Verfahren sind beispielsweise der EP 1 968 831 B1 als bekannt zu entnehmen. Das Bremssystem weist einen ersten Bremskreis und einen zweiten Bremskreis auf, welche jeweils von einem Bremsmedium durchströmbar sind. Bei dem Bremsmedium handelt es sich beispielsweise um Luft, insbesondere Druckluft. Alternativ kann es sich bei dem Bremsmedium um eine Flüssigkeit, das heißt eine Bremsflüssigkeit, handeln, sodass das Bremssystem beispielsweise als hydraulisches Bremssystem ausgebildet ist. Da das Bremssystem zwei Bremskreise aufweist, wird das Bremssystem üblicherweise auch als Zweikreis-Bremssystem bezeichnet.

Das Bremssystem weist ferner eine im ersten Bremskreis angeordnete erste Ventileinrichtung zum Einstellen einer Versorgung wenigstens einer ersten Betriebsbremseinrichtung mit dem den ersten Bremskreis durchströmenden Bremsmedium auf. Die erste Betriebsbremseinrichtung dient zum Bewirken beziehungsweise Erzeugen wenigstens einer ersten Bremskraft beziehungsweise eines ersten Bremsmoments, mittels welchem wenigstens ein Rad des Fahrzeugs abgebremst werden kann. Die erste Bremskraft beziehungsweise das erste Bremsmoment wird dabei insbesondere mittels des Bremsmediums bewirkt. Mit anderen Worten dient die erste Ventileinrichtung zur Modulation des den ersten Bremskreis durchströmenden Bremsmediums, wodurch das mittels der ersten Betriebsbremseinrichtung zu bewirkende erste Bremsmoment eingestellt wird.

Ferner umfasst das Bremssystem eine im zweiten Bremskreis angeordnete zweite Ventileinrichtung zum Einstellen einer Versorgung wenigstens einer zweiten Betriebsbremseinrichtung mit dem den zweiten Bremskreis durchströmenden Bremsmedium. Mittels der zweiten Betriebsbremseinrichtung kann wenigstens eine zweite Bremskraft beziehungsweise ein zweites Bremsmoment bewirkt beziehungsweise erzeugt werden, mittels welchem wenigstens ein anderes Rad des Fahrzeugs abgebremst werden kann. Auch hierbei wird das zweite Bremsmoment insbesondere mittels des Bremsmediums bewirkt. Mit anderen Worten dient die zweite Ventileinrichtung zur Modulation des den zweiten Bremskreis durchströmenden Bremsmediums, wodurch das mittels der zweiten Betriebsbremseinrichtung zu bewirkende zweite Bremsmoment eingestellt wird.

Die Betriebsbremseinrichtungen sind beispielsweise Bestandteil einer sogenannten Betriebsbremsanlage, welche eine Verringerung der Geschwindigkeit des Fahrzeugs, gegebenenfalls bis zum Stillstand, ermöglicht. Üblicherweise werden die Betriebsbremsanlage und somit die Betriebsbremseinrichtungen mittels wenigstens eines Betätigungselements vom Fahrer des Fahrzeugs betätigt, wobei das Betätigungselement im Innenraum angeordnet ist. Üblicherweise handelt es sich bei dem Betätigungselement um ein Pedal, welches auch als Bremspedal bezeichnet wird und der Fahrer mit seinem Fuß betätigen kann.

Schließlich umfasst das Bremssystem eine erste Recheneinrichtung zum Ansteuern der ersten Ventileinrichtung sowie eine zweite Recheneinrichtung zum Ansteuern der zweiten Ventileinrichtung. Dadurch kann die Versorgung der ersten Betriebsbremseinrichtung mit dem Bremsmedium über die erste Ventileinrichtung mittels der ersten Recheneinrichtung eingestellt werden, wobei die Versorgung der zweiten Betriebsbremseinrichtung mit dem Bremsmedium über die zweite Ventileinrichtung mittels der zweiten Recheneinrichtung eingestellt werden kann. Dadurch ist es insbesondere möglich, dass mittels der Recheneinrichtungen eine automatische Einstellung der Versorgung der jeweiligen Betriebsbremseinrichtungen mit dem Bremsmedium erfolgt. Hierdurch ist beispielsweise ein Antiblockiersystem darstellbar, mittels welchem eine Antiblockierbremsung durchgeführt werden kann. Mittels der Recheneinrichtungen kann nämlich in Abhängigkeit von einem jeweiligen, erfassten Schlupf der Räder des Fahrzeugs der Bremsdruck automatisch eingestellt, das heißt beispielsweise geregelt werden, sodass bei einer Bremsung des Fahrzeugs ein unerwünschtes Blockieren der Räder zumindest zeitweise vermieden werden kann. Mit anderen Worten ist es möglich, dass die Versorgung der Betriebsbremseinrichtungen mit dem Bremsmedium automatisch mittels der Recheneinrichtungen, insbesondere in Abhängigkeit von dem jeweiligen Schlupf der Räder, derart eingestellt wird, dass ein unerwünschtes Blockieren der Räder zumindest zeitweise verhindert wird. Dies wird beispielsweise auch als Schlupfregelung bezeichnet.

Ferner offenbart die EP 1 481 864 B1 ein Verfahren zum Abbremsen eines Kraftfahrzeugs mittels eines Fahrerassistenzsystems, wobei das Fahrzeug mit einer hydraulischen Zweikreis-Bremsanlage ausgestattet ist, die einen einkreisigen, der Fahrzeug-Vorderachse zugeordneten Hauptbremszylinder mit Bremsfluid-Reservoir aufweist und mit einer Blockierschutzeinrichtung, die eine Bremsdruckmodulationsventilanordnung und eine der Fahrzeug-Vorderachse zugeordnete Rückförderpumpe besitzt, versehen ist. Die Bremsanlage enthält ferner eine automatische Bremseinrichtung, die im Zusammenwirken mit der Blockierschutzeinrichtung und deren Rückförderpumpe die Fahrzeugbewegung fahrerunabhängig und radindividuell abbremsen und/oder stabilisieren kann. Darüber hinaus ist die Bremsanlage mit einer elektromotorisch angetriebenen Hilfspumpe zum Fördern von Bremsfluid zu Einlassventilen der Radbremszylinder der Vorderachse ausgerüstet.

Dabei ist es vorgesehen, dass für fahrerunabhängige Bremseingriffe durch ein Fahrerassistenzsystem zunächst ein der Fahrzeug-Hinterachse zugeordnetes elektrohydraulisches Bremssystem, das aus einer geeigneten, aus einem Bremsfluid-Reservoir gespeisten Pumpe und den Radbremszylindern zugeordneten Einlassventilen und Auslassventilen besteht, aktiviert wird, und dass für stärkere Fahrzeug-Verzögerungen die der Fahrzeug-Vorderachse zugeordnete elektromotorische Hilfspumpe aktiviert wird, und dass erst zur Erzielung einer maximalen Fahrzeug-Verzögerung ein zusätzlicher Bremsdruckaufbau mittels der Rückförderpumpe erfolgt.

Die zuvor beschriebene Schlupfregelung erfolgt also beispielsweise durch eine Bremsdruckmodulation und eine damit einhergehende Bremskraftmodulation, welche mittels der zuvor genannten jeweiligen Ventileinrichtungen bewirkbar sind.

Die WO 2010/146158 A2 offenbart eine Kraftfahrzeugbremsanlage mit einem hydraulisch betätigbaren Betriebsbremssystem und mit einem elektromechanisch betätigbaren Bremssystem umfassend ein Bedienelement, insbesondere zum Aktivieren einer Feststellbremsfunktion. Ferner umfasst das Bremssystem eine elektronische Steuereinheit zum Aktivieren von einem Aktuator des Bremssystems. Darüber hinaus ist eine elektrohydraulische Steuereinheit vorgesehen, die grundsätzlich einer Betriebsbremse zugeordnet ist und grundsätzlich zum Steuern oder Regeln von Betriebsbremsfunktionen, Fahrstabilitätsfunktionen und/oder Bremsassistenzfunktionen dient. Dabei ist es vorgesehen, dass zur Belastungsreduktion von Bauteilen oder Komponenten des elektromechanischen Bremssystems nach einer automatischen oder fahrerinitiierten hydraulischen Bremsbetätigung, sowie zur Vollendung einer zeitlich anschließenden elektromechanischen Bremsbetätigung in wenigstens einem Betriebsdruckraum eines elektromechanisch betätigbaren Bremssattels ein elektronisch geregelter, hydraulischer Druckkonditionierungsprozess durchgeführt wird.

Der WO 2013/178323 A1 ist ein Feststellbremsensystem für ein Fahrzeug, insbesondere für einen Kraftwagen als bekannt zu entnehmen. Das Feststellbremsensystem umfasst zwei Steuereinheiten, mittels welchen zwei Aktuatoren steuerbar sind, die dazu ausgelegt sind, jeweilige Radbremsen zu betätigen. Dabei sind die Steuereinheiten über gesonderte Leitungen mit einer Energiequelle verbunden. Ferner ist es vorgesehen, dass ausschließlich eine der Steuereinheiten mit einer Bedieneinrichtung verbunden ist. Dabei ist die Bedieneinrichtung dazu ausgelegt, Signale zur Betätigung der Radbremsen an diese Steuereinheit zu übertragen. Ferner ist die Steuereinheit dazu ausgelegt, in Abhängigkeit von den Signalen zur Betätigung der Radbremsen zumindest einen der Aktuatoren zu steuern.

Des Weiteren offenbart die WO 00/68056 A1 ein elektrohydraulisches Bremssystem, welches normalerweise in einem Brake-by-Wire-Zustand betrieben wird. In diesem Break-by-Wire-Zustand wird hydraulischer Druck auf Bremseinrichtungen aufgebracht, die an Fahrzeugrädern angebracht sind. Dabei wird der Bremsdruck proportional zu einer Bremsanforderung eines Fahrers aufgebracht, wobei die Bremsanforderung elektronisch an einem Bremspedal erfasst wird.

Aufgabe der vorliegenden Erfindung ist es, ein Bremssystem sowie ein Verfahren der eingangs genannten Art derart weiterzuentwickeln, dass sich eine besonders vorteilhafte Funktionalität des Bremssystems realisieren lässt.

Diese Aufgabe wird durch ein Bremssystem mit den Merkmalen des Patentanspruchs 1 sowie durch ein Verfahren mit den Merkmalen des Patentanspruchs 7 gelöst. Vorteilhafte Ausgestaltungen mit zweckmäßigen Weiterbildungen der Erfindung sind in den übrigen Ansprüchen angegeben.

Ein erster Aspekt der Erfindung betrifft ein Bremssystem für ein Fahrzeug, insbesondere einen Kraftwagen und insbesondere einen Personenkraftwagen. Das Bremssystem weist einen von einem Bremsmedium durchströmbaren ersten Bremskreis sowie einen von einem Bremsmedium durchströmbaren zweiten Bremskreis auf und ist demzufolge beispielsweise als Zweikreis-Bremssystem ausgebildet. Das Bremsmedium ist beispielsweise eine Flüssigkeit, das heißt eine Bremsflüssigkeit, sodass das Bremssystem beispielsweise als hydraulisches Bremssystem beziehungsweise hydraulische Bremsanlage ausgebildet ist. Alternativ kann das Bremsmedium jedoch ein von einer Flüssigkeit unterschiedliches Medium, beispielsweise ein Gas wie beispielsweise Luft, sein, sodass das Bremssystem beispielsweise als pneumatisches Bremssystem beziehungsweise pneumatische Bremsanlage ausgebildet ist.

Das Bremssystem umfasst ferner eine im ersten Bremskreis angeordnete erste Ventileinrichtung zur Modulation des den ersten Bremskreis durchströmenden Bremsmediums, um dadurch beispielsweise ein mittels wenigstens einer ersten Betriebsbremseinrichtung zu bewirkendes erstes Bremsmoment einzustellen. Mit anderen Worten dient die erste Ventileinrichtung zum Einstellen einer Versorgung wenigstens einer ersten Betriebsbremseinrichtung mit dem den ersten Bremskreis durchströmenden Bremsmedium. Darüber hinaus ist eine im zweiten Bremskreis angeordnete zweite Ventileinrichtung zur Modulation des den zweiten Bremskreis durchströmenden Bremsmediums vorgesehen, um dadurch beispielsweise ein mittels wenigstens einer zweiten Betriebsbremseinrichtung zu bewirkendes zweites Bremsmoment einzustellen. Mit anderen Worten dient die zweite Ventileinrichtung zum Einstellen einer Versorgung wenigstens einer zweiten Betriebsbremseinrichtung mit dem den zweiten Bremskreis durchströmenden Bremsmedium. Schließlich weist das Bremssystem eine erste Recheneinrichtung zum Ansteuern der ersten Ventileinrichtung und eine zweite Recheneinrichtung zum Ansteuern der zweiten Ventileinrichtung auf. Dadurch lässt sich beispielsweise mittels der Ventileinrichtungen und der Recheneinrichtungen eine eingangs beschriebene Schlupfregelung realisieren, in deren Rahmen automatische, das heißt vom Fahrer des Fahrzeugs unabhängige Bremseingriffe mittels der Recheneinrichtungen über die Ventileinrichtungen bewirkt werden.

Um nun eine besonders vorteilhafte Funktionalität des Bremssystems zu realisieren, sind eine erste elektrische Feststellbremse zum Aufbringen von Bremsmomenten an wenigstens einem ersten Rad des Fahrzeugs sowie eine zweite elektrische Feststellbremse zum Aufbringen von Bremsmomenten an wenigstens einem zweiten Rad des Fahrzeugs vorgesehen. Dabei ist die erste elektrische Feststellbremse mittels einer der Recheneinrichtungen und die zweite elektrische Feststellbremse mittels der anderen Recheneinrichtung ansteuerbar. Hierzu ist es beispielsweise vorgesehen, dass die erste elektrische Feststellbremse mit der einen Recheneinrichtung gekoppelt ist, sodass die erste elektrische Feststellbremse erste Signale, die von der einen Recheneinrichtung bereitgestellt werden, empfangen kann, wobei die erste Feststellbremse mittels der ersten Signale von der einen Recheneinrichtung angesteuert wird. Ebenfalls kann vorzugsweise vorgesehen sein, dass die zweite Feststellbremse mit der anderen Recheneinrichtung gekoppelt ist, sodass die zweite Feststellbremse zweite Signale, die von der anderen Recheneinrichtung bereitgestellt werden, empfangen kann, wobei die zweiten Signale zum Ansteuern der zweiten Feststellbremse dienen. Unter dem jeweiligen Ansteuern der Ventileinrichtungen beziehungsweise der Feststellbremsen ist ein Steuern oder insbesondere ein Regeln der Ventileinrichtungen beziehungsweise der Feststellbremsen zu verstehen, sodass demzufolge die Ventileinrichtungen beziehungsweise die Feststellbremsen mittels der jeweiligen Recheneinrichtungen gesteuert oder geregelt werden. Insbesondere kann dabei eine automatische, das heißt vom Fahrer des Fahrzeugs unabhängige Steuerung oder Regelung und somit Betätigung der jeweiligen Ventileinrichtungen beziehungsweise der jeweiligen Feststellbremsen erfolgen.

Die Kopplung zwischen der jeweiligen Recheneinrichtung und der zugehörigen elektrischen Feststellbremse beziehungsweise der Ventileinrichtung kann beispielsweise über wenigstens eine Leitung beziehungsweise ein Kabel oder aber drahtlos erfolgen. Insbesondere können Leistungshalbleiter zum Schalten von elektrischen Strömen Bestandteil der jeweiligen Recheneinrichtung sein. Alternativ kann vorgesehen sein, dass die Recheneinrichtungen mit den jeweiligen elektrischen Feststellbremsen beziehungsweise Ventileinrichtungen über einen Datenbus wie beispielsweise einen CAN-Bus oder einen FlexRay-Bus des Fahrzeugs gekoppelt sind (CAN - Controller Area Network).

Der Erfindung liegt die Idee zugrunde, nicht nur eine Redundanz hinsichtlich der Bremskreise, das heißt beispielsweise - wenn das Bremsmedium eine Flüssigkeit ist - eine hydraulische Redundanz des Bremssystems vorzusehen, sondern auch eine elektronische beziehungsweise elektrische Redundanz. Bei den Recheneinrichtungen handelt es sich um Steuergeräte, welche üblicherweise auch als elektronische Steuereinheiten (ECU - Electronic Control Unit) bezeichnet und zum Steuern beziehungsweise Regeln der Ventil-einrichtungen und insbesondere der Feststellbremsen genutzt werden. Durch das Einbeziehen der elektrischen Feststellbremsen in die elektrische beziehungsweise elektronische Redundanz sind eine besonders vorteilhafte Funktionalität, eine besonders hohe maximale Bremswirkung im Fehlerfall und ein besonders sicherer Betrieb des Bremssystems und somit des Fahrzeugs insgesamt realisierbar, da eine besonders hohe Verfügbarkeit des Bremssystem realisiert werden kann. Beispielsweise kann bei Ausfall einer der Recheneinrichtungen die andere Recheneinrichtung immer noch genutzt werden, um die der anderen, noch funktionstüchtigen Recheneinrichtung zugeordnete Feststellbremse anzusteuern, das heißt beispielsweise Zuspannkräfte der jeweiligen Feststellbremse zu erhöhen, zu halten oder zu verringern. Beispielsweise ist es dadurch möglich, den Fahrzustand des Fahrzeugs mittels zumindest einer der elektrischen Feststellbremsen auch dann zu beeinflussen, eine hohe Abbremsung und einen stabilen Fahrzustand des Fahrzeugs zu bewirken, wenn eine der Recheneinrichtungen oder eine von zwei Energieversorgungen ausgefallen ist.

Mittels des erfindungsgemäßen Bremssystems lässt sich darüber hinaus auf besonders vorteilhafte Weise ein automatisches Fahren des Fahrzeugs realisieren. Im Rahmen eines solchen automatischen Fahrens wird das Fahrzeug von einem Startpunkt zu einem Zielpunkt automatisch, das heißt ohne Zutun des Fahrers, bewegt das heißt gefahren. Durch das Vorsehen der elektrischen beziehungsweise elektronischen Redundanz und das Einbinden der elektrischen Feststellbremsen in diese elektrische beziehungsweise elektronische Redundanz kann auch im Fehlerfall eine besonders hohe Sicherheit des Fahrzeugs realisiert werden, da beispielsweise das Fahrzeug auch dann, gegebenenfalls bis zum Stillstand, stark abgebremst werden kann, wenn eine der Recheneinrichtungen oder der Energieversorgungen ausgefallen ist. Zum Abbremsen des Fahrzeugs kann nämlich dann beispielsweise die elektrische Feststellbremse genutzt werden, deren Recheneinrichtung noch funktionstüchtig ist. Auch kann das Fahrzeug in diesem Fehlerfall mittels der nur einen Feststellbremse sicher im Stand und zumindest an leichten Steigungen festgehalten werden.

Üblicherweise dienen die jeweiligen elektrischen Feststellbremsen dazu, das haltende oder abgestellte beziehungsweise geparkte Fahrzeug gegen Wegrollen, insbesondere bei einer aus der Horizontalen geneigten Fahrbahn, zu sichern. Im Rahmen des erfindungsgemäßen Bremssystems können die elektrischen Feststellbremsen jedoch ferner dazu genutzt werden, den Fahrzustand des Fahrzeugs gezielt zu beeinflussen. In der Fachliteratur wird eine solche elektrische Feststellbremse als EPB (Electric Parking Brake oder elektrische Parkbremse) bezeichnet und ist aus dem allgemeinen Stand der Technik hinlänglich bekannt.

Die der Erfindung zugrundeliegende Idee ist es somit, die elektrischen Feststellbremsen nicht durch ein gemeinsames Steuergerät beziehungsweise eine gemeinsame Recheneinrichtung anzusteuern, wie es herkömmlich vorgesehen ist, sondern eine redundante Ansteuerung der elektrischen Feststellbremsen zu realisieren, um somit eine besonders vorteilhafte Verfügbarkeit des gesamten Bremssystems zu realisieren.

Ferner ist die erste elektrische Feststellbremse mittels der ersten Recheneinrichtung und die zweite elektrische Feststellbremse mittels der zweiten Recheneinrichtung ansteuerbar.

Außerdem ist die jeweilige Recheneinrichtung dazu ausgebildet, bei einem Ausfall des jeweiligen Bremskreises zum Durchführen einer Schlupfregelung eine Spannkraft beziehungsweise Zuspannkraft der entsprechend zugehörigen elektrischen Feststellbremse während eines vorgebbaren Zeitraums zu vergrößern, zu halten und zu verringern. Hierdurch kann mittels der jeweiligen Recheneinrichtung und der jeweils zugehörigen elektrischen Feststellbremse eine einfache Antiblockierbremsung durchgeführt werden, in deren Rahmen ein unerwünschtes Blockieren wenigstens eines Rads des Fahrzeugs zumindest zeitweise vermieden werden kann. Insbesondere ist eine niederfrequente Schlupfregelung durchführbar, wobei die Spannkraft beziehungsweise Zuspannkraft der jeweiligen Feststellbremse mit einer niedrigen Frequenz, beispielsweise in einem Bereich unter 2 Hertz, vergrößert, gehalten oder verringert wird. Durch eine solche einfache Schlupfregelung kann bewirkt werden, dass das entsprechende Rad bremst und dabei jedoch nicht blockiert, sodass es hinreichend Seitenkräfte übertragen kann, wodurch ein Schleudern des Fahrzeugs verhindert werden kann. Fällt beispielsweise einer der Bremskreise aus, sodass mittels dieses einen Bremskreises eine Schlupfregelung des zugehörigen Rades nicht mehr durchführbar ist, so kann eine einfache Schlupfregelung dieses Rades mittels der zugehörigen elektrischen Feststellbremse bewirkt werden. Gemäß der Erfindung ist die erste elektrische Feststellbremse mittels der zweiten Recheneinrichtung und die zweite elektrische Feststellbremse mittels der ersten Recheneinrichtung ansteuerbar. Mit anderen Worten dient die zweite Recheneinrichtung zum Ansteuern der ersten elektrischen Feststellbremse und die erste Recheneinrichtung zum Ansteuern der zweiten elektrischen Feststellbremse. Dies bedeutet, dass die Zuordnung der elektrischen Feststellbremsen zu den Recheneinrichtungen diagonal zur Zuordnung der Ventileinrichtungen zu den Recheneinrichtungen ist. Bei dieser Ausführungsform dient nämlich die erste Recheneinrichtung zum Ansteuern der ersten Ventileinrichtung und zum Ansteuern der zweiten Feststellbremse, wobei die zweite Recheneinrichtung zum Ansteuern der zweiten Ventileinrichtung und zum Ansteuern der ersten elektrischen Feststellbremse dient. Fällt somit beispielsweise der erste Bremskreis aus, so kann ein dem ersten Bremskreis zugeordnetes Rad des Fahrzeugs mittels der ersten elektrischen Feststellbremse abgebremst werden, da die erste elektrische Feststellbremse mittels der noch funktionstüchtigen, zweiten Recheneinrichtung angesteuert wird. Fällt hingegen beispielsweise der zweite Bremskreis aus, so kann beispielsweise ein dem zweiten Bremskreis zugeordnetes Rad des Fahrzeugs mittels der zweiten Feststellbremse abgebremst werden, da die zweite elektrische Feststellbremse mittels der noch funktionstüchtigen ersten Recheneinrichtung angesteuert wird. Vereinfacht ausgedrückt wird das Fahrzeug nun mit drei Radbremsen gebremst und nicht nur mit zwei Radbremsen gemäß dem hydraulischen Bremsenaufbau. Mittels der Erfindung wird somit die maximal mögliche Verzögerung gesteigert, ohne dass das System zusätzliche Komponenten beinhaltet.

In einer Ausführungsform sind die elektrischen Feststellbremsen zum Abbremsen von jeweiligen Rädern einer Vorderachse des Fahrzeugs ausgebildet sind. Mit anderen Worten ist das jeweilige Rad, welches mittels der jeweiligen elektrischen Feststellbremse blockierbar beziehungsweise abbremsbar ist, ein Vorderrad des Fahrzeugs. Hierdurch lässt sich im Fehlerfall eine besonders hohe Verzögerung des Fahrzeugs realisieren. Zudem kann man durch einseitiges Bremsen eines Vorderrades schleudernde Fahrzeuge wieder stabilisieren, wie es heutzutage bei einem Elektronischen Stabilitätsprogramm (ESP) praktiziert wird.

Als besonders vorteilhaft hat es sich gezeigt, wenn das jeweilige Rad, welches mittels der jeweiligen elektrischen Feststellbremse blockierbar beziehungsweise abbremsbar ist, ein Hinterrad des Fahrzeugs ist. Bei dieser Ausführungsform ist es somit vorgesehen, dass die elektrischen Feststellbremsen zum Abbremsen von jeweiligen Rädern einer Hinterachse des Fahrzeugs ausgebildet sind. Hierbei muss bei einer Verkabelung des jeweiligen Rades keine Rücksicht auf die Lenkbarkeit genommen werden.

Eine weitere Ausführungsform zeichnet sich dadurch aus, dass eine erste Energieversorgungseinrichtung zum Versorgen der ersten Recheneinrichtung mit Energie und eine zweite Energieversorgungseinrichtung zum Versorgen der zweiten Recheneinrichtung mit Energie vorgesehen sind. Somit ist auch eine redundante Energieversorgung vorgesehen, wodurch sich eine besonders hohe Sicherheit und Verfügbarkeit des Bremssystem realisieren lassen.

Als besonders vorteilhaft hat es sich dabei gezeigt, wenn die erste Ventileinrichtung mittels einer der Energieversorgungseinrichtungen, insbesondere der ersten Energieversorgungseinrichtung, und die zweite Ventileinrichtung mittels der anderen Energieversorgungseinrichtung, insbesondere der zweiten Energieversorgungseinrichtung, mit Energie versorgbar sind. Dieser Ausführungsform liegt die Idee zugrunde, auch die Energieversorgung und dabei nicht nur die Recheneinrichtungen, sondern auch die Ventileinrichtungen in die Redundanz miteinzubeziehen, sodass sich auch dann, wenn eine der Energieversorgungseinrichtungen und somit einer der Bremskreise ausfällt, ein sicherer Betrieb des Fahrzeugs realisieren lässt.

Zur Realisierung eines besonders sicheren Betriebs ist es bei einer weiteren vorteilhaften Ausführungsform der Erfindung vorgesehen, dass die erste elektrische Feststellbremse mittels einer der Energieversorgungseinrichtungen, insbesondere der zweiten Energieversorgungseinrichtung, und die zweite elektrische Feststellbremse mittels der anderen Energieversorgungseinrichtung, insbesondere der ersten Energieversorgungseinrichtung, mit Energie versorgbar ist.

Die jeweilige Energieversorgungseinrichtung ist beispielsweise eine Stromquelle, mittels welcher Energie in Form von elektrischem Strom bereitgestellt werden kann. Bei einer solchen Energieversorgungseinrichtung handelt es sich beispielsweise um eine Batterie oder einen Kondensator. Die jeweilige Recheneinrichtung, die jeweilige Ventileinrichtung und die jeweilige elektrische Feststellbremse sind dabei beispielsweise über wenigstens eine Leitung mit der jeweiligen Energieversorgungseinrichtung verbunden, insbesondere elektrisch verbunden, sodass Energie von der Energieversorgungseinrichtung an die Recheneinrichtung, die Ventileinrichtung beziehungsweise die elektrische Feststellbremse übertragen werden kann. Es wird dabei vorzugsweise ausgeschlossen, dass Energie in Form von elektrischem Strom von der einen Energieversorgungseinrichtung zur anderen Energieversorgungseinrichtung fließen kann.

Zur Realisierung eines besonders sicheren Betriebs erfasst die erste Recheneinheit Raddrehzahlsignale aller Räder des ersten Bremskreises und die zweite Recheneinheit erfasst Raddrehzahlsignale aller Räder des zweiten Bremskreises. Die erste und die zweite Recheneinrichtung tauschen die von ihnen erfassten Raddrehzahlsignale miteinander über einen internen Datenbus aus, sodass jeder Recheneinheit die Raddrehzahlsignale aller Fahrzeugräder zur Verfügung stehen.

Ein zweiter Aspekt der Erfindung betrifft ein Verfahren zum Betreiben eines Bremssystems, insbesondere eines erfindungsgemäßen Bremssystems, für ein Fahrzeug, insbesondere einen Kraftwagen und insbesondere einen Personenkraftwagen, mit einem von einem Bremsmedium durchströmbaren ersten Bremskreis, einem von einem Bremsmedium durchströmbaren zweiten Bremskreis, einer im ersten Bremskreis angeordneten ersten Ventileinrichtung zur Modulation des den ersten Bremskreis durchströmenden Bremsmediums, einer im zweiten Bremskreis angeordneten zweiten Ventileinrichtung zur Modulation des den zweiten Bremskreis durchströmenden Bremsmediums, einer ersten Recheneinrichtung, mittels welcher die erste Ventileinrichtung angesteuert wird, und mit einer zweiten Recheneinrichtung, mittels welcher die zweite Ventileinrichtung angesteuert wird.

Zur Realisierung einer besonders vorteilhaften Funktionalität des Bremssystems ist es vorgesehen, dass eine erste elektrische Feststellbremse zum Aufbringen beziehungsweise Erzeugen von Bremsmomenten an wenigstens einem ersten Rad des Fahrzeugs mittels einer der Recheneinrichtungen und eine zweite elektrische Feststellbremse zum Aufbringen beziehungsweise Erzeugen von Bremsmomenten an wenigstens einem zweiten Rad des Fahrzeugs mittels der anderen Recheneinrichtung angesteuert wird. Vorteilhafte Ausgestaltungen des ersten Aspekts der Erfindung sind als vorteilhafte Ausgestaltungen des zweiten Aspekts der Erfindung anzusehen und umgekehrt.

Ferner ist es vorgesehen, dass die erste elektrische Feststellbremse mittels der zweiten Recheneinrichtung und die zweite elektrische Feststellbremse mittels der ersten Recheneinrichtung angesteuert wird. Die Zuordnung der elektrischen Feststellbremsen zu den Recheneinrichtungen ist hierbei diagonal im Vergleich zur Zuordnung der Ventileinrichtungen zu den Recheneinrichtungen, sodass im Fehlerfall durch die elektrische Feststellbremse andere Räder als die hydraulisch gebremsten Räder des selben Bremskreises des Fahrzeugs gezielt beeinflusst, insbesondere abgebremst, werden.

Des Weiteren wird mittels der jeweiligen Recheneinrichtung bei einem Ausfall des jeweiligen Bremskreises eine Schlupfregelung durchgeführt, indem eine Zuspannkraft der jeweiligen elektrischen Feststellbremse durch Ansteuern dieser mittels der jeweiligen Recheneinrichtung während eines vorgebbaren Zeitraums vergrößert, gehalten oder verringert wird.

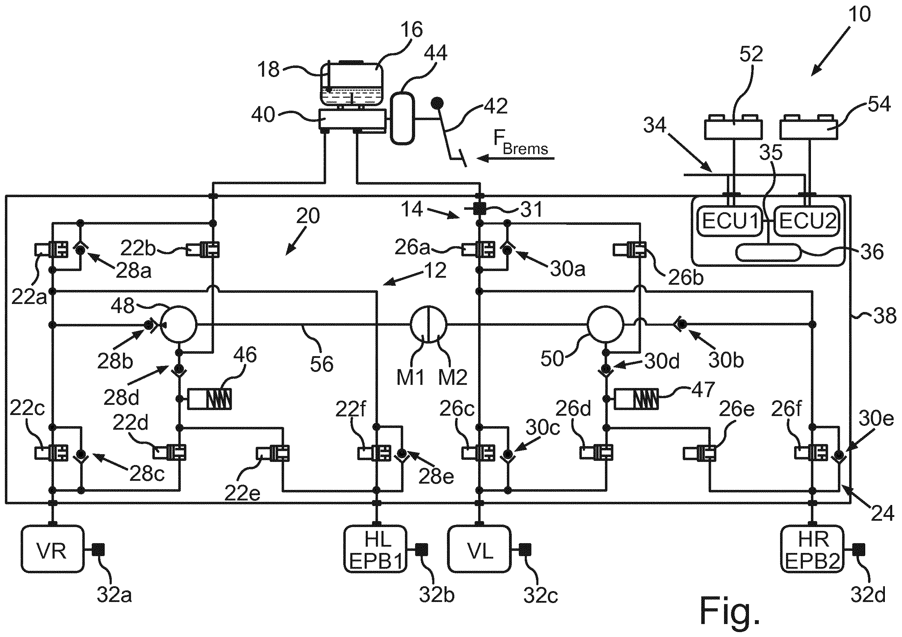

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder in Alleinstellung verwendbar, ohne den in den Ansprüchen festgelegten Rahmen der Erfindung zu verlassen.

Die Zeichnung zeigt in der einzigen Fig. einen Schaltplan eines Bremssystems für ein Fahrzeug in Form eines Personenkraftwagens, wobei nicht nur eine hydraulische, sondern auch eine elektrische Redundanz vorgesehen ist, in deren Rahmen eine erste elektrische Feststellbremse mittels einer Recheneinrichtung und eine zweite elektrische Feststellbremse mittels einer anderen Recheneinrichtung des Bremssystems angesteuert wird.

Die Fig. zeigt einen Schaltplan eines im Ganzen mit 10 bezeichneten Bremssystems, welches auch als Bremsanlage bezeichnet wird. Das Bremssystem 10 wird für ein Fahrzeug, insbesondere einen Kraftwagen, verwendet und dient dazu, jeweilige Räder des Kraftwagens und somit beispielsweise den Kraftwagen insgesamt abzubremsen.

Das Bremssystem 10 weist einen ersten Bremskreis 12 auf, welcher von einem Bremsmedium in Form einer Bremsflüssigkeit durchströmbar ist. Ferner weist das Bremssystem 10 einen zweiten Bremskreis 14 auf, welcher von einem Bremsmedium in Form einer Bremsflüssigkeit durchströmbar ist. Bei diesen Bremsflüssigkeiten handelt es sich um die gleiche Bremsflüssigkeit, wobei die Bremskreise 12 und 14 vorliegend mit einem gemeinsamen Ausgleichsbehälter 16 fluidisch verbunden sind. In dem Ausgleichsbehälter 16 ist die Bremsflüssigkeit aufgenommen. Ferner ist der Ausgleichsbehälter 16 mit einem Füllstandssensor 18 ausgestattet, mittels welchem zumindest ein Parameter erfassbar ist, welcher eine Menge der in dem Ausgleichsbehälter 16 aufgenommenen Bremsflüssigkeit charakterisiert.

Im ersten Bremskreis 12 ist eine im Ganzen mit 20 bezeichnete erste Ventileinrichtung angeordnet. Die erste Ventileinrichtung umfasst eine Mehrzahl von ersten Ventilen 22a-f, welche als geregelte, das heißt regelbare Ventile ausgebildet sind. Beispielsweise sind die ersten Ventile 22a-f als Magnetventile und/oder als Zwei/Zwei-Wege-Ventile ausgebildet. Die Ventile 22a und 22b sind sogenannte Trennventile, wobei die Ventile 22c, 22d, 22e und 22f sogenannte Raddruckventile sind. Im zweiten Bremskreis 14 ist eine im Ganzen mit 24 bezeichnete, zweite Ventileinrichtung angeordnet, welche zweite Ventile 26a-f umfasst. Dabei sind auch die Ventile 26a-f als geregelte beziehungsweise regelbare Ventile ausgebildet, wobei sie als Magnetventile und/oder als Zwei/Zwei-Wege-Ventile ausgebildet sein können. Die Ventile 26a und 26b sind Trennventile, wobei die Ventile 26c, 26d, 26e und 26f Raddruckventile sind. Aus der Fig. ist erkennbar, dass im ersten Bremskreis 12 ferner eine Mehrzahl von ersten Rückschlagventilen 28a-e angeordnet ist. Ebenso ist im zweiten Bremskreis 14 eine Mehrzahl von zweiten Rückschlagventilen 30a-e angeordnet. Insgesamt ist erkennbar, dass die Bremskreise 12 und 14 zumindest im Wesentlichen identisch oder sehr ähnlich aufgebaut sind.

Bezuggenommen wird im Weiteren auf ein Kraftfahrzeug mit diagonaler Bremskreisaufteilung. In der Fig. sind darüber hinaus Räder in Form eines rechten Vorderrads VR, eines linken Hinterrads HL, eines linken Vorderrads VL und eines rechten Hinterrads HR des Fahrzeugs gezeigt. Den Rädern ist jeweils eine Betriebsbremseinrichtung zugeordnet, mittels welcher das jeweilige Rad abgebremst werden kann. Aus der Fig. ist erkennbar, dass die Betriebsbremseinrichtung des rechten Vorderrads VR und die Betriebsbremseinrichtung des linken Hinterrads HL dem ersten Bremskreis 12 zugeordnet beziehungsweise im ersten Bremskreis 12 angeordnet und demzufolge mittels der den ersten Bremskreis 12 durchströmenden Bremsflüssigkeit betätigbar sind. Die jeweiligen Betriebsbremseinrichtungen des rechten Vorderrads VR und des linken Hinterrads HL werden somit über die erste Ventileinrichtung 20 mit der den ersten Bremskreis 12 durchströmenden Bremsflüssigkeit versorgt, wobei diese Versorgung der Betriebsbremseinrichtungen des rechten Vorderrads VR und des linken Hinterrads HL mit der den ersten Bremskreis 12 durchströmenden Kühlflüssigkeit mittels der ersten Ventileinrichtung 20 einstellbar ist.

Die Betriebsbremseinrichtungen des linken Vorderrads VL und des rechten Hinterrads HR sind im zweiten Bremskreis 14 angeordnet, sodass die Betriebsbremseinrichtungen des linken Vorderrads VL und des rechten Hinterrads HR über die zweite Ventileinrichtung 24 mit der den zweiten Bremskreis 14 durchströmenden Bremsflüssigkeit versorgt werden können. Diese Versorgung der Betriebsbremseinrichtungen des linken Vorderrads VL und des rechten Hinterrads HR mit der den zweiten Bremskreis 14 durchströmenden Bremsflüssigkeit ist mittels der zweiten Ventileinrichtung 24 einstellbar. Dadurch können ein jeweiliger Bremsdruck und eine daraus resultierende Bremskraft, mit welcher das jeweilige Rad abgebremst wird, bedarfsgerecht eingestellt werden.

Hierzu sind ferner eine erste Recheneinrichtung ECU1 und eine zweite Recheneinrichtung ECU2 vorgesehen. Die erste Recheneinrichtung ECU1 ist elektrisch mit der ersten Ventileinrichtung 20, das heißt mit den ersten Ventilen 22a-f, verbunden und dient zum Ansteuern, vorliegend zum Regeln der ersten Ventileinrichtung 20 beziehungsweise der ersten Ventile 22a-f. Dadurch kann mittels der ersten Recheneinrichtung ECU1 der Bremsdruck der Betriebsbremseinrichtungen des rechten Vorderrads VR und des linken Hinterrads HL eingestellt werden.

Die zweite Recheneinrichtung ECU2 ist mit der zweiten Ventileinrichtung 24, das heißt mit den zweiten Ventilen 26a-f, elektrisch verbunden und dient zum Ansteuern, vorliegend zum Regeln, der Ventileinrichtung 24 beziehungsweise der Ventile 26a-f. Hierdurch kann der jeweilige Bremsdruck der Betriebsbremseinrichtungen des linken Vorderrads VL und des rechten Hinterrads HR automatisch mittels der zweiten Recheneinrichtung ECU2 eingestellt werden. Im Rahmen einer solchen Einstellung des jeweiligen Bremsdrucks kann vorgesehen sein, dass der Bremsdruck über einen vorgebbaren Zeitraum mittels der jeweiligen Recheneinrichtung ECU1 beziehungsweise ECU2 mehrere Male abwechselnd erhöht, gehalten und verringert wird. Eine solche Einstellung des Bremsdrucks wird auch als Bremsdruckmodulation bezeichnet, wodurch eine Schlupfregelung des jeweiligen Rades erfolgen kann. Mittels dieser Schlupfregelung kann beim Abbremsen des jeweiligen Rades ein unerwünschtes Blockieren dieses Rades vermieden werden, sodass das Rad hinreichend Seitenkräfte übertragen und ein Schleudern des Fahrzeugs vermieden werden kann. Ferner ist im zweiten Bremskreis 14 ein Drucksensor 31 angeordnet, um den Bremswunsch des Fahrers zu detektieren.

Die geschilderte Bremsdruckmodulation erfolgt in Abhängigkeit von einem jeweiligen Schlupf der Räder, wobei der jeweilige Schlupf anhand von jeweiligen Drehzahlen der Räder ermittelt werden kann. Dabei wird jeweilige Drehzahl des jeweiligen Rades mittels eines jeweiligen Raddrehzahlsensors 32a-d erfasst. Die Raddrehzahlsensoren 32a und 32b sind mit der ersten Recheneinrichtung ECU1 elektrisch verbunden, sodass jeweilige Drehzahlsignale, die die jeweiligen Drehzahlen des rechten Vorderrads VR und des linken Hinterrads HL charakterisieren, von den Raddrehzahlsensoren 32a und 32b bereitgestellt, an die erste Recheneinrichtung ECU1 übertragen und von dieser empfangen und ausgewertet werden können. Die Raddrehzahlsensoren 32c und 32d hingegen sind mit der zweiten Recheneinrichtung ECU2 elektrisch verbunden, sodass jeweilige Drehzahlsignale, welche die jeweiligen Drehzahlen des linken Vorderrades VL und des rechten Hinterrades HR charakterisieren, von den Raddrehzahlsensoren 32c und 32d bereitgestellt, an die zweite Recheneinrichtung ECU2 übertragen und von dieser empfangen und ausgewertet werden können. Der Austausch aller Raddrehzahlinformationen zwischen den beiden ECU1 und ECU2 erfolgt durch einen internen Datenbus 35 beider ECUs. Jeder ECU stehen dann die Raddrehzahlen aller Fahrzeugräder zur Verfügung. Die jeweiligen elektrischen Kopplungen mit dem Restfahrzeug, u.a. die Sollwertvorgaben zum automatischen Fahren, erfolgen beispielsweise über einen in der Fig. ausschnittsweise dargestellten externen Datenbus 34 des Fahrzeugs, wobei es sich beispielsweise um einen CAN-Bus oder Flexray-Bus handelt. Über diesen externen Datenbus 34 können entsprechende Signale übermittelt werden.

In der Fig. ist darüber hinaus eine Erfassungseinrichtung 36 erkennbar, welche auch als Sensorcluster bezeichnet wird und zur Ermittlung von fahrdynamischen Größen dient. Diese mittels der Erfassungseinrichtung 36 ermittelten, fahrdynamischen Größen werden beispielsweise über den internen Datenbus 35 an die Recheneinrichtungen ECU1 und ECU2 übertragen und von diesen empfangen. Die Recheneinrichtungen ECU1 und ECU2 sind beispielsweise Steuergeräte beziehungsweise elektronische Steuereinheiten, welche zum Regeln der Ventileinrichtungen 20 und 24 dienen.

In der Fig. erkennbare Leitungen, über welche die Betriebsbremseinrichtungen mit der jeweiligen Bremsflüssigkeit versorgbar sind, sind beispielsweise in einem einstückigen Hydraulikblock ausgebildet, welcher in der Fig. schematisch gezeigt und mit 38 bezeichnet ist. Hierbei sind die Leitungen beispielsweise als Bohrungen ausgebildet.

Das Bremssystem 10 umfasst darüber hinaus einen Hauptbremszylinder 40, welcher als Tandemhauptzylinder ausgebildet ist. Über den Hauptbremszylinder 40 werden die jeweiligen Betriebsbremseinrichtungen mit der Betriebsflüssigkeit versorgt. Mit anderen Worten kann mittels des Hauptbremszylinders 40 die Versorgung der Betriebsbremseinrichtungen mit der Bremsflüssigkeit und somit die jeweilige Bremskraft durch den Fahrer des Fahrzeugs eingestellt werden. Die Betriebsbremseinrichtungen umfassen jeweils beispielsweise einen Bremszylinder, welcher mit der Bremsflüssigkeit versorgbar ist und dazu dient, einen Druck der jeweiligen Bremsflüssigkeit in ein Bremsmoment einer jeweiligen Radbremse umzusetzen.

Der Fahrer kann ein Abbremsen des Fahrzeugs über ein Betätigungselement in Form eines Bremspedals 42 bewirken, welches im Innenraum des Fahrzeugs angeordnet ist. Der Fahrer kann das Bremspedal 42 mit seinem Fuß betätigen, wobei er eine Bremskraft F_{Brems} auf das Bremspedal 42 ausübt. Die Bremskraft F_{Brems} des Fahrers wird mittels eines Bremskraftverstärkers 44 verstärkt und schließlich auf den Hauptbremszylinder 40 übertragen. Würde die vom Fahrer ausgeübte Bremskraft F_{Brems} beispielsweise so hoch sein, dass eines der Räder blockieren würde, so kann diesem Blockieren mittels der entsprechenden Recheneinrichtung ECU1 beziehungsweise ECU2 über die jeweilige Ventileinrichtung 20 beziehungsweise 24 entgegengewirkt werden, sodass ein unerwünschtes Blockieren des Rads verhindert wird.

Im ersten Bremskreis 12 sind ferner ein erster Niederdruckspeicher 46 und eine erste Pumpe in Form einer ersten Rückförderpumpe 48 angeordnet. Die Rückförderpumpe 48 ist mittels eines ihr zugeordneten Motors in Form eines ersten Elektromotors M1 antreibbar und dient dazu, überschüssige Bremsflüssigkeit aus dem ersten Niederdruckspeicher 46 zurück in den zugehörigen ersten Bremskreis 12 zu fördern. Analog dazu sind im zweiten Bremskreis 14 ein zweiter Niederdruckspeicher 47 und eine zweite Pumpe in Form einer zweiten Rückförderpumpe 50 angeordnet. Die zweite Rückförderpumpe 50 ist mittels eines zweiten Motors in Form eines zweiten Elektromotors M2 antreibbar und dient dazu, überschüssige Bremsflüssigkeit aus dem zweiten Niederdruckspeicher 47 zurück in den zugehörigen zweiten Bremskreis 14 zu pumpen.

Außerdem umfasst das Bremssystem 10 eine erste Energieversorgungseinrichtung vorliegend in Form einer ersten Batterie 52. Die erste Batterie 52 ist elektrisch mit der ersten Recheneinrichtung ECU1, dem ersten Elektromotor M1 und der ersten Ventileinrichtung 20 beziehungsweise den ersten Ventilen 22a-f elektrisch verbunden, sodass die erste Recheneinrichtung ECU1, der erste Elektromotor M1 und die erste Ventileinrichtung 20 mittels der ersten Batterie 52 mit Energie in Form von elektrischem Strom versorgbar sind. Dies bedeutet, dass die erste Recheneinrichtung ECU1, der erste Elektromotor M1 und die als Magnetventile ausgebildeten Ventile 22a-f mit elektrischem Strom aus der ersten Batterie 52 versorgt werden. Außerdem weist das Bremssystem 10 eine zweite Energieversorgungseinrichtung in Form einer zweiten Batterie 54 auf. Die zweite Batterie 54 ist elektrisch mit der zweiten Recheneinrichtung ECU2, dem zweiten Elektromotor M2 und der zweiten Ventileinrichtung 24, insbesondere den zweiten Ventilen 26a-f, elektrisch verbunden, sodass die zweite Recheneinrichtung ECU2, der zweite Elektromotor M2 und die zweite Ventileinrichtung 24 beziehungsweise die als Magnetventile ausgebildeten, zweiten Ventile 26a-f mit Energie in Form von elektrischem Strom aus der zweiten Batterie 54 versorgt werden.

Somit ist aus der Fig. insgesamt erkennbar, dass bei dem Bremssystem 10 sowohl eine hydraulische Redundanz, das heißt eine Redundanz hinsichtlich der Bremskreise 12 und 14, als auch eine elektrische Redundanz geschaffen ist, da nicht eine gemeinsame Recheneinrichtung, sondern die zwei Recheneinrichtungen ECU1 und ECU2 zum Regeln verwendet werden. Darüber hinaus wird zur Energieversorgung nicht eine gemeinsame Energieversorgungseinrichtung verwendet, sondern zur Energieversorgung werden die beiden Batterien 52 und 54 verwendet. Schließlich werden die Rückförderpumpen 48 und 50 nicht mittels eines gemeinsamen Motors, sondern mittels jeweiliger Motoren in Form der Elektromotoren M1 und M2 angetrieben.

Um nun eine besonders vorteilhafte Funktionalität und insbesondere eine besonders hohe Verfügbarkeit des Bremssystems 10 und eine hohe Sicherheit des Fahrzeugs insgesamt zu realisieren, umfasst das Bremssystem 10 darüber hinaus eine erste elektrische Feststellbremse EPB1 sowie eine zweite elektrische Feststellbremse EPB2. Die elektrischen Feststellbremsen EPB1 und EPB2 werden normalerweise zum Blockieren der jeweiligen Räder verwendet, um das geparkte Fahrzeug vor einem unerwünschten Wegrollen zu sichern. Dies ist insbesondere dann vorteilhaft, wenn das Fahrzeug an einem Gefälle abgestellt ist. Die elektrischen Feststellbremsen EPB1 und EPB 2 können aber auch zur Abbremsung des Fahrzeugs mit genutzt werden.

Aus der Fig. ist erkennbar, dass die erste elektrische Feststellbremse EPB1 dem linken Hinterrad HL zugeordnet ist, sodass also die erste elektrische Feststellbremse EPB1 zum Erzeugen einer Spannkraft beziehungsweise zum Feststellen des linken Hinterrads HL dient. Die elektrische Feststellbremse EPB2 hingegen ist dem rechten Hinterrad HR zugeordnet, sodass die zweite elektrische Feststellbremse EPB2 zum Erzeugen einer Spannkraft beziehungsweise zum Feststellen des rechten Hinterrads HR dient.

Bei dem Bremssystem 10 ist ferner vorgesehen, dass die erste elektrische Feststellbremse EPB1 mit der zweiten Recheneinrichtung ECU2 gekoppelt und demzufolge mittels der zweiten Recheneinrichtung ECU2 ansteuerbar ist beziehungsweise angesteuert wird. Die zweite elektrische Feststellbremse EPB2 jedoch ist mit der ersten Recheneinrichtung ECU1 gekoppelt, sodass die zweite elektrische Feststellbremse EPB2 mittels der ersten Recheneinrichtung ECU1 ansteuerbar ist beziehungsweise angesteuert wird. Ferner ist die erste elektrische Feststellbremse EPB1 elektrisch mit der zweiten Batterie 54 verbunden, sodass die erste elektrische Feststellbremse EPB1 mit Energie beziehungsweise elektrischem Strom aus der zweiten Batterie 54 versorgt werden kann. Außerdem ist die zweite elektrische Feststellbremse EPB2 elektrisch mit der ersten Batterie 52 verbunden, sodass die zweite elektrische Feststellbremse EPB2 mit Energie beziehungsweise elektrischem Strom aus der ersten Batterie 52 versorgt werden kann.

Somit ist erkennbar, dass die Zuordnung der elektrischen Feststellbremsen EPB1 und EPB2 zur den Recheneinrichtungen ECU1 und ECU2 und zu den Batterien 52 und 54 diagonal zur Zuordnung der Betriebsbremseinrichtungen des linken Hinterrads HL und des rechten Hinterrads HR zu den Bremskreisen 12 und 14 und demzufolge zu den Recheneinrichtungen ECU1 und ECU2 und zu den Batterien 52 und 54 ist. Fallen beispielsweise der erste Bremskreis 12 und somit die Betriebsbremseinrichtung des linken Hinterrads HL aus, so kann das linke Hinterrad HL dennoch mittels der ersten elektrischen Feststellbremse EPB1 abgebremst werden, wobei das rechte Hinterrad HR mittels der Betriebsbremseinrichtung des rechten Hinterrads HR abgebremst werden kann.

Dabei ist es möglich, auch mittels der jeweiligen elektrischen Feststellbremsen EPB1 und EPB2 eine Schlupfregelung zu realisieren, in deren Rahmen die Spannkräfte beziehungsweise Zuspannkräfte der jeweiligen elektrischen Feststellbremse EPB1 und EPB2 während einer vorgebbaren Zeitdauer mittels der entsprechenden Recheneinrichtung ECU1 beziehungsweise ECU2 vergrößert, gehalten und verringert. Fällt somit beispielsweise der erste Bremskreis 12 aus, so kann eine Schlupfregelung des linken Hinterrads HL mittels der Betriebsbremseinrichtung des linken Hinterrads HL nicht mehr bewirkt werden, jedoch ist eine solche Schlupfregelung des linken Hinterrads HL mittels der ersten elektrischen Feststellbremse EPB1 realisierbar. Entsprechendes kann auf das rechte Hinterrad HR übertragen werden, wenn der zweite Bremskreis 14 ausfällt. In diesem Fall kann eine Schlupfregelung des rechten Hinterrads HR mittels der ersten Recheneinrichtung ECU1 über die zweite elektrische Feststellbremse EPB2 bewirkt werden.

Weiterhin besonders vorteilhaft ist es, dass der hydraulische Teil des Bremssystems 10, das heißt die Bremskreise 12 und 14, diagonal ausgelegt ist beziehungsweise sind. Dies bedeutet, dass jedem der Bremskreise 12 und 14 sowohl ein Vorderrad als auch ein Hinterrad zugeordnet ist. Fällt somit einer der Bremskreise 12 und 14 aus, so kann dennoch mittels des anderen Bremskreises sowohl eines der Vorderräder als auch eines der Hinterräder hydraulisch abgebremst werden, wobei das zum ausgefallenen Bremskreis gehörende Hinterrad mittels der entsprechenden elektrischen Feststellbremse EPB1 beziehungsweise EPB2 elektrisch beziehungsweise elektronisch abgebremst werden kann. Vorliegend ist den jeweiligen elektrischen Feststellbremsen EPB1 und EPB2 kein Raddrehzahlsensor der eigenen Recheneinrichtung ECU1 beziehungsweise ECU2 und der eigenen Energieversorgung zugeordnet. Dies bedeutet, dass der Raddrehzahlsensor 32b von der ersten Batterie 52 mit Energie versorgt wird, und dass seine Signale von ersten Recheneinrichtung ECU1 ausgewertet werden, wobei die erste elektrische Feststellbremse EPB1 der zweiten Recheneinrichtung ECU2 der zweiten Batterie 54 zugeordnet ist. Entsprechend dazu ist der Raddrehzahlsensor 32d der zweiten Batterie 54 und der zweiten Recheneinrichtung ECU2 zugeordnet, während die zweite elektrische Feststellbremse EPB2 der ersten Recheneinrichtung ECU1 und der ersten Batterie 52 zugeordnet ist. Es hat sich jedoch gezeigt, dass Recheneinrichtungen und Raddrehzahlsensoren sehr robust sind, da sie mit eigenen Sicherungen abgesichert sind und keine großen elektrischen Lasten darstellen. Ferner weisen Recheneinrichtungen, Datenbussysteme und Raddrehzahlsensoren einen sehr robusten Betrieb auch bei sehr geringen elektrischen Spannungen von beispielsweise 6 Volt auf.

Daher ist es hinreichend, wenn die erste Recheneinrichtung ECU1 den Raddrehzahlsensor 32b auswertet und ein die Drehzahl des linken Hinterrades HL charakterisierendes erstes Signal bereitstellt und dieses erste Signal vorzugsweise über den internen Datenbus 35 an die zweite Recheneinrichtung ECU2 überträgt, welche das erste Signal empfängt und in Abhängigkeit von dem ersten Signal die erste elektrische Feststellbremse EPB1 für das linke Hinterrad HL ansteuert. Dementsprechend kann beispielsweise die zweite Recheneinrichtung ECU2 den Raddrehzahlsensor 32d am rechten Hinterrad HR auswerten und ein die Drehzahl des rechten Hinterrads HR charakterisierendes zweites Signal bereitstellen und dieses zweite Signal über den internen Datenbus 35 an die erste Recheneinrichtung ECU1 übertragen, welche das zweite Signal empfängt und in Abhängigkeit von dem zweiten Signal die zweite elektrische Feststellbremse EPB2 für das rechte Hinterrad HR ansteuert. Über diesen besonders einfachen Umweg kann auch eine Schlupfregelung am jeweiligen Hinterrad erfolgen, welches bei Ausfall des entsprechenden Bremskreises 12 beziehungsweise 14 mittels der jeweiligen elektrischen Feststellbremse EPB1 beziehungsweise EPB2 im Rahmen der Schlupfregelung gebremst werden kann.

Den Rückförderpumpen 48 und 50 ist gemeinsame Welle 56 zugeordnet, über welche die Rückförderpumpen 48 und 50 angetrieben werden beziehungsweise antreibbar sind. Die Welle 56 ist beispielsweise mittels der Elektromotoren M1 und M2 antreibbar, wobei beispielsweise jeweilige Rotoren der Elektromotoren M1 und M2 drehfest mit der Welle 56 verbunden sind. Dadurch kann bei Ausfall eines der beiden Elektromotoren M1 oder M2 der hydraulische Druck in beiden hydraulischen Bremskreisen mit dem vom Ausfall nicht betroffenen Motor aufgebaut werden.

Ferner kann vorgesehen sein, dass zum Antreiben der Rückförderpumpen 48 und 50, insbesondere der Welle 56, ein den Rückförderpumpen 48 und 50 gemeinsamer Elektromotor verwendet wird, welcher als Sechs-Phasenmotor aufgebaut ist. Der den Rückförderpumpen 48 und 50 gemeinsame Elektromotor weist somit wenigstens sechs Phasen auf, wobei drei der Phasen beispielsweise mittels der ersten Batterie 52 und mittels der ersten Recheneinrichtung ECU1 und drei andere der Phasen mittels der zweiten Batterie 54 und mittels der zweiten Recheneinrichtung ECU2 betrieben beziehungsweise mit Energie versorgt werden. Bei Ausfall einer der sechs Phasen lässt sich der Elektromotor durch die verbleibenden fünf Phasen noch sicher drehen. Dieser Ausführungsform liegt die Idee zugrunde, dass eine Mechanik wie beispielsweise Lager und Wellen, solange sie ausreichend dimensioniert sind, sehr robust sind und eher selten ausfallen. Daher kann beispielsweise für die Rückförderpumpen 48 und 50 ein gemeinsamer Motor verwendet werden, welcher jedoch redundant über die Recheneinrichtung ECU1 und ECU2 angesteuert und redundant über die Batterien 52 und 54 mit Energie versorgt werden kann.

## Patentansprüche

1. Bremssystem (10) für ein Fahrzeug, insbesondere einen Kraftwagen, mit:
- einem von einem Bremsmedium durchströmbaren ersten Bremskreis (12),
- einem von einem Bremsmedium durchströmbaren zweiten Bremskreis (14),
- einer im ersten Bremskreis (12) angeordneten ersten Ventileinrichtung (20) zur Modulation des den ersten Bremskreis (12) durchströmenden Bremsmediums,
- einer im zweiten Bremskreis (14) angeordneten zweiten Ventileinrichtung (24) zur Modulation des den zweiten Bremskreis (14) durchströmenden Bremsmediums,
- einer ersten Recheneinrichtung (ECU1) zum Ansteuern der ersten Ventileinrichtung (20), und
- einer zweiten Recheneinrichtung (ECU2) zum Ansteuern der zweiten Ventileinrichtung (24),
- einer ersten elektrischen Feststellbremse (EPB1) zum Aufbringen von Bremsmomenten an wenigstens einem ersten Rad (HL, VR) des Fahrzeugs, und
- einer zweiten elektrischen Feststellbremse (EPB2) zum Aufbringen von Bremsmomenten an wenigstens einem zweiten Rad (HR, VL) des Fahrzeugs, wobei die erste elektrische Feststellbremse (EPB1) mittels einer der Recheneinrichtungen (ECU1, ECU2) und die zweite elektrische Feststellbremse (EPB2) mittels der anderen Recheneinrichtung (ECU1) ansteuerbar ist,
**dadurch gekennzeichnet, dass**
die erste elektrische Feststellbremse (EPB1) mittels der zweiten Recheneinrichtung (ECU2) und die zweite elektrische Feststellbremse (EPB2) mittels der ersten Recheneinrichtung (ECU1) ansteuerbar ist, wobei die jeweilige Recheneinrichtung (ECU1, ECU2) dazu ausgebildet ist, zum Durchführen einer Schlupfregelung bei einem Ausfall des jeweiligen Bremskreises (12, 14) eine Zuspannkraft der entsprechend zugehörigen elektrischen Feststellbremse (EPB1, EPB2) während eines vorgebbaren Zeitraums zu erhöhen, zu halten und zu verringern.

2. Bremssystem (10) nach Anspruch 1,
**dadurch gekennzeichnet, dass**
die elektrischen Feststellbremsen (EPB1, EPB2) zum Abbremsen von jeweiligen Rädern (VR, VL) einer Vorderachse des Fahrzeugs ausgebildet sind.

3. Bremssystem (10) nach Anspruch 1,
**dadurch gekennzeichnet, dass**
die elektrischen Feststellbremsen (EPB1, EPB2) zum Abbremsen von jeweiligen Rädern einer Hinterachse (HR, HL) des Fahrzeugs ausgebildet sind.

4. Bremssystem (10) nach einem der vorhergehenden Ansprüche,
**dadurch gekennzeichnet, dass**
eine erste Energieversorgungseinrichtung (52) zum Versorgen der ersten Recheneinrichtung (ECU1) mit Energie und eine zweite Energieversorgungseinrichtung (54) zum Versorgen der zweiten Recheneinrichtung (ECU2) mit Energie vorgesehen sind.

5. Bremssystem (10) nach Anspruch 4,
**dadurch gekennzeichnet, dass**
die erste Ventileinrichtung (20) mittels einer der Energieversorgungseinrichtungen (52, 54), insbesondere der ersten Energieversorgungseinrichtung (52), und die zweite Ventileinrichtung (24) mittels der anderen Energieversorgungseinrichtung (54), insbesondere der zweiten Energieversorgungseinrichtung (54), mit Energie versorgbar ist.

6. Bremssystem (10) nach Anspruch 4 oder 5,
**dadurch gekennzeichnet, dass**
die erste elektrische Feststellbremse (EPB1) mittels einer der Energieversorgungseinrichtungen (52, 54), insbesondere der zweiten Energieversorgungseinrichtung (54), und die zweite elektrische Feststellbremse (EPB2) mittels der anderen Energieversorgungseinrichtung (52), insbesondere der ersten Energieversorgungseinrichtung (52), mit Energie versorgbar ist.

7. Verfahren zum Betreiben eines Bremssystems (10) für ein Fahrzeug, insbesondere einen Kraftwagen, mit einem von einem Bremsmedium durchströmbaren ersten Bremskreis (12), einem von einem Bremsmedium durchströmbaren zweiten Bremskreis (14), einer im ersten Bremskreis (12) angeordneten ersten Ventileinrichtung (20) zur Modulation des den ersten Bremskreis (12) durchströmenden Bremsmediums, einer im zweiten Bremskreis (14) angeordneten zweiten Ventileinrichtung (24) zur Modulation des den zweiten Bremskreis (14) durchströmenden Bremsmediums, einer ersten Recheneinrichtung (ECU1), mittels welcher die erste Ventileinrichtung (20) angesteuert wird, und mit einer zweiten Recheneinrichtung (ECU2), mittels welcher die zweite Ventileinrichtung (24) angesteuert wird, wobei eine erste elektrische Feststellbremse (EPB1) zum Aufbringen von Bremsmomenten an wenigstens einem ersten Rad (HL, VR) des Fahrzeugs mittels einer der Recheneinrichtungen (ECU1, ECU2) und eine zweite elektrische Feststellbremse (EPB2) zum Aufbringen von Bremsmomenten an wenigstens einem zweiten Rad (HR, VL) des Fahrzeugs mittels der anderen Recheneinrichtung (ECU1) angesteuert wird,
**dadurch gekennzeichnet, dass**
die erste elektrische Feststellbremse (EPB1) mittels der zweiten Recheneinrichtung (ECU2) und die zweite elektrische Feststellbremse (EPB2) mittels der ersten Recheneinrichtung (ECU1) angesteuert wird, wobei mittels der jeweiligen Recheneinrichtung (ECU1, ECU2) bei einem Ausfall des jeweiligen Bremskreises (12, 14) eine Schlupfregelung durchgeführt wird, indem eine Zuspannkraft der jeweiligen elektrischen Feststellbremse (EPB1, EPB2) durch Ansteuern dieser mittels der jeweiligen Recheneinrichtung (ECU1, ECU2) während eines vorgebbaren Zeitraums erhöht, gehalten und verringert wird.

## Claims

1. Brake system (10) for a vehicle, in particular a motor vehicle, having:
- a first brake circuit (12) through which a braking medium can flow,
- a second brake circuit (14) through which a braking medium can flow,
- a first valve device (20) which is arranged in the first brake circuit (12) and has the purpose of modulating the braking medium which flows through the first brake circuit (12),
- a second valve device (24) which is arranged in the second brake circuit (14) and has the purpose of modulating the braking medium which flows through the second brake circuit (14),
- a first computing device (ECU1) for actuating the first valve device (20), and
- a second computing device (ECU2) for actuating the second valve device (24),
- a first electric parking brake (EPB1) for applying braking torques to at least a first wheel (RL, FR) of the vehicle, and
- a second electric parking brake (EPB2) for applying braking torques to at least a second wheel (RR, FL) of the vehicle, wherein the first electric parking brake (EPB1) can be actuated by means of one of the computing devices (ECU1, ECU2), and the second electric parking brake (EPB2) can be actuated by means of the other computing device (ECU1),
**characterized in that**
the first electric parking brake (EPB1) can be actuated by means of the second computing device (ECU2), and the second electric parking brake (EPB2) can be actuated by means of the first computing device (ECU1), wherein the respective computing device (ECU1, ECU2) is designed to increase, maintain and reduce a brake application force of the correspondingly associated electric parking brake (EPB1, EPB2) during a predefinable time period in order to carry out a slip control in the event of a failure of the respective brake circuit (12, 14).

2. Brake system (10) according to Claim 1,
**characterized in that**
the electric parking brakes (EPB1, EPB2) are designed to brake respective wheels (FR, FL) of a front axle of the vehicle.

3. Brake system (10) according to Claim 1,
**characterized in that**
the electric parking brakes (EPB1, EPB2) are designed to brake respective wheels of a rear axle (RR, RL) of the vehicle.

4. Brake system (10) according to one of the preceding claims,
**characterized in that**
a first energy supply device (52) is provided for supplying the first computing device (ECU1) with energy, and a second energy supply device (54) is provided for supplying the second computing device (ECU2) with energy.

5. Brake system (10) according to Claim 4,
**characterized in that**
the first valve device (20) can be supplied with energy by means of one of the energy supply devices (52, 54), in particular the first energy supply device (52), and the second valve device (24) can be supplied with energy by means of the other energy supply device (54), in particular the second energy supply device (54).

6. Brake system (10) according to Claim 4 or 5,
**characterized in that**
the first electric parking brake (EPB1) can be supplied with energy by means of one of the energy supply devices (52, 54), in particular the second energy supply device (54), and the second electric parking brake (EPB2) can be supplied with energy by means of the other energy supply device (52), in particular the first energy supply device (52).

7. Method for operating a brake system (10) for a vehicle, in particular a motor vehicle, having a first brake circuit (12) through which a braking medium can flow, a second brake circuit (14) through which a braking medium can flow, a first valve device (20) which is arranged in the first brake circuit (12) and has the purpose of modulating the braking medium which flows through the first brake circuit (12), a second valve device (24) which is arranged in the second brake circuit (14) and has the purpose of modulating the braking medium which flows through the second brake circuit (14), a first computing device (ECU1) by means of which the first valve device (20) is actuated, and having a second computing device (ECU2) by means of which the second valve device (24) is actuated, wherein a first electric parking brake (EPB1) is actuated in order to apply braking torques to at least a first wheel (RL, FR) of the vehicle by means of one of the computing devices (ECU1, ECU2), and a second electric parking brake (EPB2) is actuated in order to apply braking torques to at least a second wheel (RR, FL) of the vehicle by means of the other computing device (ECU1),
**characterized in that**
the first electric parking brake (EPB1) is actuated by means of the second computing device (ECU2), and the second electric parking brake (EPB2) is actuated by means of the first computing device (ECU1), wherein in the event of a failure of the respective brake circuit (12, 14) a slip control is carried out by means of the respective computing device (ECU1, ECU2) **in that** a brake application force of the respective electric parking brake (EPB1, EPB2) is increased, maintained and reduced by actuating said electric parking brake (EPB1, EPB2) by means of the respective computing device (ECU1, ECU2) during a predefinable time period.

## Revendications

1. Système de freinage (10) pour un véhicule, notamment un véhicule motorisé, comprenant :
- un premier circuit de freinage (12) qui peut être traversé par un courant de fluide de frein,
- un deuxième circuit de freinage (14) qui peut être traversé par un courant de fluide de frein,
- un premier dispositif à vanne (20) disposé dans le premier circuit de freinage (12) et destiné à la modulation du fluide de frein qui traverse le premier circuit de freinage (12),
- un deuxième dispositif à vanne (24) disposé dans le deuxième circuit de freinage (14) et destiné à la modulation du fluide de frein qui traverse le deuxième circuit de freinage (14),
- un premier dispositif de calcul (ECU1) destiné à commander le premier dispositif à vanne (20), et
- un deuxième dispositif de calcul (ECU2) destiné à commander le deuxième dispositif à vanne (24),
- un premier frein de stationnement électrique (EPB1) destiné à appliquer des moments de freinage à au moins une première roue (HL, VR) du véhicule, et
- un deuxième frein de stationnement électrique (EPB2) destiné à appliquer des moments de freinage à au moins une deuxième roue (HR, VL) du véhicule, le premier frein de stationnement électrique (EPB1) pouvant être commandé au moyen de l'un des dispositifs de calcul (ECU1, ECU2) et le deuxième frein de stationnement électrique (EPB2) au moyen de l'autre dispositif de calcul (ECU1),
**caractérisé en ce que**
le premier frein de stationnement électrique (EPB1) peut être commandé au moyen du deuxième dispositif de calcul (ECU2) et le deuxième frein de stationnement électrique (EPB2) au moyen du premier dispositif de calcul (ECU1), le dispositif de calcul (ECU1, ECU2) correspondant étant configuré pour augmenter, pour maintenir et pour réduire une force d'application du frein de stationnement électrique (EPB1, EPB2) associé correspondant pendant une période pouvant être prédéfinie en vue de réaliser une régulation du patinage dans le cas d'une panne du circuit de freinage (12, 14) correspondant.

2. Système de freinage (10) selon la revendication 1, **caractérisé en ce que** les freins de stationnement électriques (EPB1, EPB2) sont configurés pour le freinage des roues (VR, VL) respectives d'un essieu avant du véhicule.

3. Système de freinage (10) selon la revendication 1, **caractérisé en ce que** les freins de stationnement électriques (EPB1, EPB2) sont configurés pour le freinage des roues (HR, HL) respectives d'un essieu arrière du véhicule.

4. Système de freinage (10) selon l'une des revendications précédentes, **caractérisé en ce qu'**il existe un premier dispositif d'alimentation en énergie (52) destiné à alimenter en énergie le premier dispositif de calcul (ECU1) et un deuxième dispositif d'alimentation en énergie (54) destiné à alimenter en énergie le deuxième dispositif de calcul (ECU2).

5. Système de freinage (10) selon la revendication 4, **caractérisé en ce que** le premier dispositif à vanne (20) peut être alimenté en énergie au moyen de l'un des dispositifs d'alimentation en énergie (52, 54), notamment du premier dispositif d'alimentation en énergie (52), et le deuxième dispositif à vanne (24) au moyen de l'autre dispositif d'alimentation en énergie (54), notamment du deuxième dispositif d'alimentation en énergie (54).

6. Système de freinage (10) selon la revendication 4 ou 5, **caractérisé en ce que** le premier frein de stationnement électrique (EPB1) peut être alimenté au moyen de l'un des dispositifs d'alimentation en énergie (52, 54), notamment du deuxième dispositif d'alimentation en énergie (54), et le deuxième frein de stationnement électrique (EPB2) au moyen de l'autre dispositif d'alimentation en énergie (52), notamment du premier dispositif d'alimentation en énergie (52).

7. Procédé pour faire fonctionner un système de freinage (10) pour un véhicule, notamment un véhicule motorisé, comprenant un premier circuit de freinage (12) qui peut être traversé par un courant de fluide de frein, un deuxième circuit de freinage (14) qui peut être traversé par un courant de fluide de frein, un premier dispositif à vanne (20) disposé dans le premier circuit de freinage (12) et destiné à la modulation du fluide de frein qui traverse le premier circuit de freinage (12), un deuxième dispositif à vanne (24) disposé dans le deuxième circuit de freinage (14) et destiné à la modulation du fluide de frein qui traverse le deuxième circuit de freinage (14), un premier dispositif de calcul (ECU1) au moyen duquel est commandé le premier dispositif à vanne (20), et comprenant un deuxième dispositif de calcul (ECU2) au moyen duquel est commandé le deuxième dispositif à vanne (24), un premier frein de stationnement électrique (EPB1) destiné à appliquer des moments de freinage à au moins une première roue (HL, VR) du véhicule étant commandé au moyen de l'un des dispositifs de calcul (ECU1, ECU2) et un deuxième frein de stationnement électrique (EPB2) destiné à appliquer des moments de freinage à au moins une deuxième roue (HR, VL) du véhicule étant commandé au moyen de l'autre dispositif de calcul (ECU1),
**caractérisé en ce que**
le premier frein de stationnement électrique (EPB1) est commandé au moyen du deuxième dispositif de calcul (ECU2) et le deuxième frein de stationnement électrique (EPB2) au moyen du premier dispositif de calcul (ECU1), une régulation du patinage étant réalisée au moyen du dispositif de calcul (ECU1, ECU2) correspondant dans le cas d'une panne du circuit de freinage (12, 14) correspondant, **en ce qu'**une force d'application du frein de stationnement électrique (EPB1, EPB2) correspondant est augmentée, maintenue et réduite pendant une période pouvant être prédéfinie en commandant celui-ci au moyen du dispositif de calcul (ECU1, ECU2) correspondant.
